# EUROPEAN PATENT APPLICATION

(11) **EP 1 767 329 A2**
(43) Date of publication of application: **28.03.2007**
(21) Application number: 05028613.7
(22) Date of filing: 28.12.2005
(51) Int. Cl.: B29C 44/58, B29C 44/34

(54) **Mould with means for depositing release agent for making articles of polyurethane foam**

(30) Priority: 25.09.2005 SI 200500273
(71) Applicant: Koroski Holding d.o.o., 2380 Slovenj Gradec (SI)
(72) Inventor: Grabnar, Dusan, 2000 Maribor (SI); Gorsek, Dusan, 2370 Dravograd (SI)
(74) Representative: Vonnemann, Gerhard

(57) **Abstract**

The mould with means for depositing release agent for making articles of polyurethane foam solves the problem of a simple, fast, uniform and to the environment and people friendly and cost-effective deposit of the liquid release agent (8) into the mould (1) and is also of simple and compact construction.
In and through the upper part (3) of the mould (1) there are together with automatic tap nozzles (4) constructed injector nozzles (5) for an automated deposit of the harmful release agent (8) to the surfaces of the nest (6), which is carried out before filling the mould (1) by polyurethane components.

## Description

The subject of the invention is a mould for making inserts from polyurethane foam with a built-in substance for depositing a separating agent, or more precisely, it is a mould with built-in injector nozzles for depositing a separating agent into the product nest, respectively.

According to the international patent classification this invention belongs to B 29C 33/44 and additionally to B 29C 33/56 and to B 29C 33/00.

The technical problem being solved by this invention is such a construction of the mould for making polyurethane foamy inserts preferentially for the automotive industry needs, which will provide a simple, more uniform and faster deposit of the separating agent over the entire surface of the product nest at the closed mould and without human presence, owing to which the human factor will be excluded at work, the deposit procedure faster, the separating agent consumption smaller, and the separating agent negative impact on the environment and people will likewise be excluded, and simultaneously the mould construction simple and compact.

In the production of polyurethane foamy inserts, prior to filling by polyurethane components, it is required to deposit the separating agent on the moulds inner surface of the so called product nest, which after the finished procedure makes the polyurethane products separation from the product nest walls and their removal from moulds possible. The product nest is a name for a hollow, empty space between the mould upper and nether half, wherein products or foamy pieces are formed in the foaming procedure. The separating agent will thus be used for forming bare polyurethane foam in therefor suitable moulds, and it disables foam to stick with the mould. Therefore, the separating agent application in the foamy inserts production procedure is essential and very important. It applies however that the separating agent deposit must be uniform over the entire surface of the product nest, as in the opposite case deformations can appear on the polyurethane foam product surface. The separating agent consists of various chemical substances like solvents and solid particles, therefore, it is harmful both for people and the wide environment.

So far the best known solution is based on depositing the separating agent on moulds inner surfaces or on the product nest surfaces respectively by means of kinetic or electrostatic energy, namely by injecting the separating agent into open moulds. This method of depositing the separating agent is carried out by means of pneumatic or electrostatic injector guns, namely manually, semi-automatically or automatically by a robot. Weakness and deficiency of these known methods is above all in the fact that the separating agent deposit into the moulds interior is carried out from outside and at open moulds respectively. For this reason, the separating agent consumption is big, deposits are non-uniform and above all very aggravating and harmful for people and the environment. Experiences have shown that the separating agent losses amount to about 40%. For this reason, the moulds outer walls, workers and vicinity are therewith highly loaded by the spurted separating agent. Therefore, it is each time required to clean moulds and their nearby working environment, what represents a harmful impact both on operators and on the environment, and not last but least, it represents stoppages and large expenses in the procedure itself. For the workers and environment protection, it is therefore required to build special explosion safe ventilation systems in the production premises, and which are not completely safe, and which additionally require each time replacement of contaminated filters.

According to the document GB 8618616, a procedure of forming products from an unsaturated artificial resin is known, whereby dust is deposited into an open tool. It is namely its deficiency that it fails to resolve the deposit at a closed tool, and it only deals with a dust deposit and not with a liquid separating agent. And its weakness is in expensive purifying plants and in its harmful impact on the environment and human health.

According to the document DE 103 20 341 there is known an injector device and the procedure of injecting products from polyurethane containing external mixing and nozzle therefore. It resolves mixing of A+B components of polyurethane in the said space inside the tool, moulds In this way generated polyurethane is then deposited on a suitable product mould. It is namely its deficiency that it fails to resolve the separating agent deposit.
The problem that has remained unsolved is above all in the non-uniform and harmful deposit of a liquid separating agent into the product nest, namely at an open tool or mould, respectively and for this reason the separating agent losses are big.

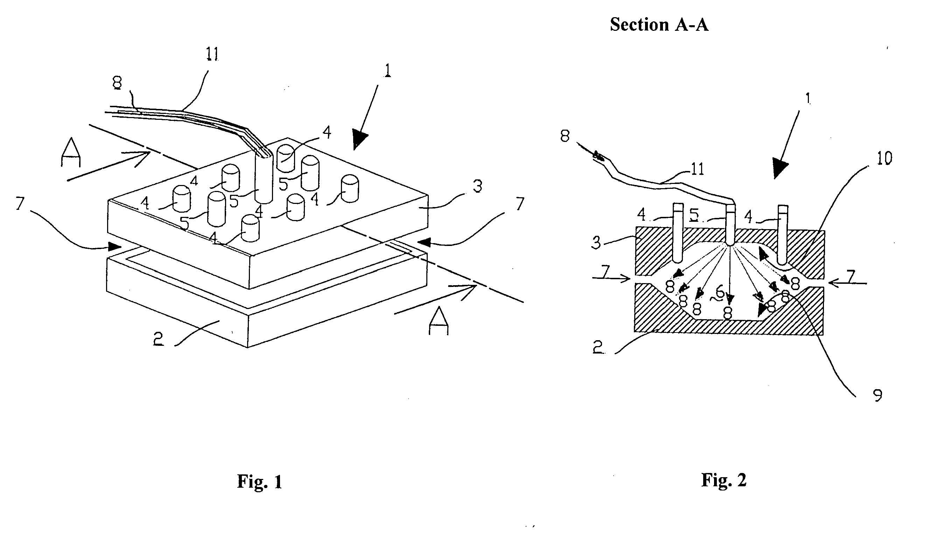

According to the invention, the problem is resolved by a mould for making inserts from polyurethane foam with a built-in substance for depositing a separating agent, having in its upper part the built-in injector nozzles for injecting and depositing the separating agent on the product nest walls, and which is carried out at a closed mould. The invention will be described following an example of its feasibility and figures, which show
Fig. 1 Closed mould in the axonometric projection according to the invention
Fig. 2 Closed mould in the A-A cross section

According to the invention, the mould 1 is constructed of the nether part 2 and upper part 3, which in the closed position form a joint inner hollow space or nest 6 respectively. In the area of sealing surfaces or between the divisible plane of the mould 1, its nether part 2 and its upper part 3 are distant from each other by the air slit 7 size.

In the shown feasible example, two rows of automatic tap nozzles 4 and a row of injector nozzles 5, placed between them, are constructed in the upper part 3 of the mould 1. In each individual row, there are located three independent units of automatic tap nozzles 4, what equally applies to injector nozzles 5. The rows are parallel to each other. Both, the automatic tap nozzles 4 and the injector nozzles 5 are constructed perpendicular through the upper part 3 wall so that they extend a bit into the nest 6 by their injector ends. Each injector nozzle 5 is equipped with its own feeding pipe 11, being on the other side joined with an optional container of the liquid separating agent 8.

In some other feasible example, being not shown, the injector nozzles 5 on the upper part 3 can also be located otherwise. They can be constructed in optional free locations on or in the upper part 3 respectively, in arranged or unarranged interactive positions. This means that injector nozzles 5, depending on the required automatic tap nozzles 4 installation inside the upper part 3, can be optionally positioned, likewise through its side walls, and they can be of optional construction. Likewise, injector nozzles 5 can be constructed through the upper part 3 at other optional angles, and also in an interactive combination of various angles. Namely, depending on the size and form of the nest 6 inside the mould 1.

Likewise, in some other feasible example, also not shown, a joint feeding pipe 11 leads to injector nozzles 5 to feed the liquid separating agent 8, which flows into an adequate distributor in front of them, and from this distributor we lead the separating agent 8 further into each individual injector nozzle 5 separately.

As in previously described ways the injector nozzles 5 can be constructed on or in the upper part 3 of the mould 1 respectively and so can in identical ways be also constructed on or in the nether part 2 respectively, or even combined in the upper part 3 and in the nether part 2 simultaneously.

And it applies for all previously described feasible examples that the number of injector nozzles 5 in individual moulds 1 is optional, as their locations are also optional on or in their upper part 3 respectively. The latter thus depends on the purpose and construction of the mould 1, and consequently on the form and properties of manufactured polyurethane foamy inserts.

It applies however that the mould 1 must have so many injector nozzles 5 located in so many locations on or through the upper part 3 and/or the nether part 2 that the injection or deposit of the liquid separating agent 8 is made possible over the entire volume of the nest 6 or over its surfaces 9 and 10 respectively.

As already mentioned in the preamble of this invention, before filling polyurethane components in the mould 1 the adequate liquid separating agent 8 should be injected. In this technological operation, the mould 1 is closed or its nether part 2 and upper part 3 are distant from each other by the air slit 7 to equalize pressure inside the nest 6. In the opposite case overpressure would occur in the nest 6 due to injecting the separating agent.

The liquid separating agent 8 is fed under pressure from the unshown container and along the feeding pipe 11 into injector nozzles 5. Injector nozzles 5 inject the liquid separating agent 8 into the nest 6 under pressure, which enables creation of haze which makes possible that the separating agent 8 is uniformly deposited over the surface of the nest 6 or over the entire surface 9 in the nether part 2 and over the entire surface 10 in the upper part 3 of the mould 1. The nether part 2 and the upper part 3 of the mould 1, in the divisible plane of the mould 1, are distant from each other by the air slit 7 for preventing creation of overpressure during the separating agent 8 injection through injector nozzles 5 into the nest 6.

The quantity and time of the separating agent injection through the injector nozzles 5 into the nest 6 of the mould 1 are defined by a suitable programme inside the technological procedure, which is as a rule specific for each type of products from polyurethane foam or specific to this product adjusted moulds 1 respectively. And it applies that the quantity and geometry of the separating agent 8 deposit into the mould 1 intended for production of polyurethane foamy inserts should be defined optimal as to the required specificity of an individual product and therewith of the mould 1.

As already said, by using a mould for making inserts from polyurethane foam with a built-in substance for depositing a separating agent according to the invention, the procedure of injecting and depositing the liquid separating agent 8 on the surface 9 and 10 of the nest 6 is carried out at a closed mould or for the air slit 7 at the mould 1 ajar. In this way, the separating agent 8 deposit from outside into the open mould 1 is omitted. The deposit is faster and more uniform. This is made possible by injector nozzles 5, which are in the upper part 3 constructed together with automatic tap nozzles 4. Empirical tests have shown that according to the invention, by depositing the liquid separating agent 8 through injector nozzles 5 into the moulds 1, up to 40% of the separating agent 8 is saved up per production unit or per their series respectively. Consequently, the workers and environment load by the harmful contents of the separating agent 8 is reduced, after the deposit operation the moulds are cleaner, therefore, the cleaning costs are lower. In this operation, the workers are omitted, as the injection procedure is automated. Investments in demanding and expensive explosive safe ventilation systems are also omitted, and consequently replacing and depositing waste and by the separating agent 8 contaminated filters.

## Claims

1. A mould for making inserts from polyurethane foam with a built-in substance for depositing a separating agent, having built-in automatic tap nozzles in the mould upper half, is **characterised by** the fact that on and through the front wall of the mould (1) upper part (3) there are constructed at least one or more injector nozzles (5) in the way that they extend into the nest (6) by their injector ends; that injector nozzles (5) inside the upper part (3) are constructed in optional locations and in optional angles to the plane of the upper par (3) front surface.

2. The mould according to claim 1 is **characterised by** the fact that as a rule each injector nozzle (5) is joined with the adjacent feeding pipe (11) for feeding the liquid separating agent (8), without or with an intermediate distributor.

3. The procedure of the mould adjustment and implementing the separating agent deposit procedure is **characterised by** the fact that during the procedure of depositing the liquid separating agent (8) through injector nozzles (5) into the nest (6) of the mould (1) the nether part (2) and the upper part (3) are distant from each other by an optionally large air slit (7), making impossible or disabling respectively the overpressure creation inside the nest (6).

4. The procedure according to claim 3 is **characterised by** the fact that for a uniform deposit of the liquid separating agent (8) over the entire surface of the nest (6) or its surfaces (9, 10) respectively, there is a condition that injector nozzles (5) are inside the upper part(3), properly arranged and correctly directed towards the nest (6).

5. The procedure according to claim 3 is **characterised by** the fact that optimal parameters like quantity, time and geometry of the separating agent (8) deposit depend on demands of individual products and inserts from polyurethane foam, respectively and thereby consequently on specificity of the nests (6) construction inside the moulds (1).
